(19) Europäisches Patentamt
European Patent Office
Office européen des brevets

(11) **EP 3 068 671 B1**

(12) **EUROPÄISCHE PATENTSCHRIFT**

(45) Veröffentlichungstag und Bekanntmachung des Hinweises auf die Patenterteilung:
**26.06.2019   Patentblatt 2019/26**

(21) Anmeldenummer: **14783580.5**

(22) Anmeldetag: **02.10.2014**

(51) Int Cl.:
**B60W 30/095** (2012.01)

(86) Internationale Anmeldenummer:
**PCT/EP2014/071168**

(87) Internationale Veröffentlichungsnummer:
**WO 2015/071024 (21.05.2015 Gazette 2015/20)**

(54) **VERFAHREN ZUR PROGNOSE DES FAHRWEGES EINES KRAFTFAHRZEUGES UND PROGNOSEEINRICHTUNG**

METHOD FOR PREDICTING THE ROUTE OF A MOTOR VEHICLE AND PREDICTION DEVICE

PROCÉDÉ PERMETTANT DE PRONOSTIQUER L'ITINÉRAIRE D'UN VÉHICULE AUTOMOBILE ET DISPOSITIF DE PRONOSTIC

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.11.2013   DE 102013018967**

(43) Veröffentlichungstag der Anmeldung:
**21.09.2016   Patentblatt 2016/38**

(73) Patentinhaber: **Valeo Schalter und Sensoren GmbH**
**74321 Bietigheim-Bissingen (DE)**

(72) Erfinder: **KRÄHLING, Martin**
**21075 Hamburg (DE)**

(56) Entgegenhaltungen:
**US-A1- 2003 040 849     US-A1- 2008 071 469**
**US-A1- 2010 057 361**

**Beschreibung**

Die Erfindung betrifft ein Verfahren zur Prognose des voraussichtlichen Fahrweges eines fahrenden Kraftfahrzeuges gemäß dem Oberbegriff des Patentanspruchs 1. Die Erfindung betrifft außerdem gemäß Anspruch 7 eine Prognoseeinrichtung zur Durchführung des Verfahrens.

Die Prognose des voraussichtlichen Fahrweges eines fahrenden Kraftzeuges ist sehr wichtig für eine Vielzahl von Fahrerassistenzsystemen, insbesondere solchen Fahrerassistenzsystemen, welche das Fahrzeug in die Lage versetzen, seine Umgebung über entsprechend installierte Sensoren wahrzunehmen und zu interpretieren. Passive Fahrassistenzsysteme, beispielsweise Kollisionswarnungen (FCW = forward collision warning), informieren den Fahrer ohne einen Eingriff in die Fahrdynamik. Aktive Systeme hingegen verhindern Unfälle durch Eingriffe in die Fahrdynamik durch Regeleingriff in das Motormanagement und/oder das Bremssystem. Beispiele für derartige Fahrerassistenzsysteme sind adaptive Geschwindigkeitsregelungen (ACC = adaptive cruise control), welche als aktives System nicht nur Kollisionswarnungen anzeigen und auf diese Weise Unfällen entgegen wirken können, sondern auch aktiv die Geschwindigkeit des Fahrzeuges gemäß der Verkehrssituation anpassen können. Auch aktive Notbremssysteme (AEB = autonomous emergency braking) erfordern als aktives Sicherheitssystem eine möglichst genaue Prognose des voraussichtlichen Fahrwegs des fahrenden Kraftfahrzeugs.

US 2003/0040849A1 offenbart ein Verfahren und ein System zur Abschätzung einer Trajektorie eines Fahrzeugs mit einem Elektronischen Stabilitäts Programm (ESP). Hierbei werden Sensordaten gewonnen, die die Dynamik des Fahrzeugs beschreiben. Die Sensordaten und vom ESP abgeschätzte Parameter, die die Fahrzeugdynamik beschreiben, werden genutzt, um eine Abschätzung der Trajektorie des Fahrzeugs zu berechnen. Die Akquisition der Sensordaten und der Berechung der abgeschätzten Fahrzeugtrajektorie sind unabhängig von externen signalübertragenden infrastrukturbasierten trajektorienabschätzungs Werkzeugen.

US 2010/0057361A1 offenbart ein Verfahren zur Vorhersage von zukünftigen Zuständen eines Fahrzeugs. Das Verfahren beinhaltet das Auswählen eines Models mit n Zuständen, die die dynamischen Merkmale des Fahrzeugs wiederspiegeln, das Eingeben von verrauschten Sensormessungen, die den aktuellen Zustand des Fahrzeugs repräsentieren, um $(2n+1)$ Sigmapunkte $X_i$ zu generieren, wobei $i=0...2n$ ist und jeder Sigmapunkt n Zustände aufweist, das Durchführen von $(2n+1)$ Integrationen, wobei jede Integration das Ausbreiten der x Zustände der entsprechenden Sigmapunkte $X_t$ durch die nicht lineare Funktion $Y_i=f(X_i)$ beinhaltet, und das Kombinieren der ausgebreiteten Sigmapunkte um der vorhergesagten zukünftigen Zustände des Fahrzeugs zu erzeugen.

US 2008/0071469A1 offenbart ein Verfahren und ein System zur Vorhersage einer zukünftigen Position eines Fahrzeugs an einem Zeitpunkt $T_h$. Das Verfahren bestimmt die Position des Fahrzeugs an einem Zeitpunkt $T_0$ mittels GPS sowie der Geschwindigkeit, der Beschleunigung und des Winkels des Lenkrads an einem Zeitpunkt $T_0$ mittels entsprechender Sensoren des Fahrzeugs. Mit diesen Faktoren wird ein nicht-lineares mathematisches Modell erstellt, während die Position des Fahrzeugs an einem Zeitpunkt $T_0+T_h$ durch numerische Integration des mathematischen Models mit einer anpassbaren Schrittweite $T_{step}$ bestimmt wird. Der Schritt $T_{stop}$ wird adaptiv in Abhängigkeit der Genauigkeitsanforderungen des Fahrzeugs angepasst.

US 2011/0046843A1 offenbart ein Verfahren zur Prognose des voraussichtlichen Fahrwegs eines fahrenden Kraftfahrzeuges, wobei über einen bestimmten Prognosezeitraum eine Gierrate auf der Grundlage von Sensorinformationen und vorgegebenen Informationen über den Straßenverlauf ermittelt wird und anschließend der vorausliegende Fahrweg des Fahrzeuges auf der Grundlage von Geschwindigkeit und Ausrichtung des Fahrzeuges sowie der geschätzten Gierrate prognostiziert wird. Die Informationen über den Straßenverlauf sind als Karteninformation vorgegeben und umfassen die Geometrie des Straßenabschnitts, auf dem das Fahrzeug derzeit fährt. Die Sensorinformationen umfassen bei dem bekannten Verfahren Informationen eines Gierratensensors und eines Geschwindigkeitssensors des Fahrzeuges und ferner Ortsinformationen von einem entsprechenden Fahrzeugsensor, dessen Information in Verbindung mit den vorgegebenen Karteninformationen über den Straßenverlauf ausgewertet wird.

Bei dem bekannten Verfahren wird zur Generierung einer Pfadprognose ein dynamisches Fahrzeugmodel numerisch integriert. Das dynamische Fahrzeugmodel zieht dabei sowohl den von der Drehbewegung des Fahrzeuges beeinflusste rotatorischen Bewegungszustand als auch den von der Längsbewegung des Fahrzeugs beeinflussten longitudinalen Bewegungszustand heran. Als rotatorischer Bewegungszustand wird die Gierrate über den Prädiktionszeitraum geschätzt, nämlich auf der Grundlage einer gemessenen Fahrzeuggeschwindigkeit und dem augenblicklichen Kurvenradius, welcher aus dem vorgegebenen Kartenmaterial hergeleitet wird. Als longitudinaler Bewegungszustand wird die Fahrzeugbeschleunigung berücksichtigt, welche von einem Beschleunigungssensor oder unterschiedlichen Radgeschwindigkeiten hergeleitet wird. Die Fahrzeugbeschleunigung wird über den gesamten Prognosezeitraum als konstant angenommen.

Das bekannte Verfahren kann nur auf der Grundlage sorgfältig ermittelten Kartenmaterials den voraussichtlichen Fahrweg eines fahrenden Kraftfahrzeugs prognostizieren, sodass ein enormer Aufwand zur Ermittlung genauen Kartenmaterials erforderlich ist. Das Kartenmaterial muss zudem ständig aktualisiert werden, um Veränderungen des Straßenverlaufes, beispielsweise durch Baustellen, zu berücksichtigen. Insbesondere kann jedoch das bekannte Verfahren bei instationären Fahrtzuständen des Fahrzeuges, beispielsweise in Beschleunigungszuständen oder Kurvenfahrten, nur eine sehr ungenaue Prognose des voraussichtlichen Fahrwegs liefern. Zudem führt die Annahme einer konstanten Beschleunigung und konstanter Drehgeschwindigkeit zur Schätzung der Gierrate nur zu einer ungenauen Annäherung, sodass insbesondere beim Eintritt oder beim Verlassen einer Kurve ungenaue Prognose Ergebnisse erzielt werden können. Während einer Kurvenfahrt werden nämlich oft unterschiedliche Kurvenradien beim Eintritt und beim Verlassen der Kurve gefahren, da der Fahrer des Fahrzeuges oftmals beim Eintritt in die Kurve stärker einlenkt. Die Annahme konstanter Bewegungszustände über einen Prognosezeitraum bei dem bekannten Verfahren kann daher allenfalls bei kontinuierlichen Kurvenfahrten akzeptable Prognoseergebnisse liefern, was jedoch bei tatsächlichen Kurvenfahrten selten der Fall ist. Mit ungenauen Prognoseergebnissen ist jedoch die Funktionalität eines Fahrassistenzsystems, welches auf die Genauigkeit der ermittelten Fahrwegprognose angewiesen ist, nicht gegeben.

Der vorliegenden Erfindung liegt das Problem zugrunde, eine von Karteninformation unabhängige Prognose des voraussichtlichen Fahrwegs eines fahrenden Kraftfahrzeugs mit möglichst großer Genauigkeit auch bei instationären Fahrtzuständen des Fahrzeuges zu schaffen.

Das Problem wird erfindungsgemäß durch ein Verfahren zur Prognose des voraussichtlichen Fahrwegs eines fahrenden Kraftfahrzeuges mit den Merkmalen des Anspruchs 1 gelöst. Das Problem wird außerdem gemäß Anspruch 7 durch eine Prognoseeinrichtung zur Durchführung des Verfahrens gelöst.

Erfindungsgemäß werden zeitbezogene Funktionsvorschriften für den prädizierten rotatorischen Fahrzustand und/oder den prädizierten longitudinalen Fahrzustand bestimmt. Ein Fahrzustand umfasst dabei den momentanen Wert einer physikalischen Größe, welche die Bewegung des Fahrzeugs beschreibt. Nach diesem Verständnis umfasst der rotatorische Fahrzustand eine Information zur momentanen Drehbewegung des Fahrzeugs, beispielsweise der Ausrichtungswinkel oder der Drehrate des Fahrzeuges, jeweils zu einem bestimmten Zeitpunkt. Der longitudinale Fahrzustand umfasst entsprechend eine Information zur momentanen Längsbewegung des Fahrzeugs, beispielsweise die Geschwindigkeit oder die Beschleunigung. Durch numerische Integration dieser Funktionsvorschriften werden voraussichtliche Werte des jeweiligen Fahrzustands zu bestimmten Zeitpunkten prognostiziert.

Zur Bestimmung der zeitbezogenen Funktionsvorschrift des jeweiligen prädizierten Fahrzustandes (rotatorischer und/oder longitudinaler Fahrzustand) werden jeweils rotatorische bzw. longitudinale Eingangsgrößen zu jeweils mindestens zwei zeitlichen Ableitungen des betreffenden Fahrzustandes aus Messwerten ermittelt. Unter einer zeitlichen Ableitung wird dabei eine momentane Änderungsrate verstanden. Es werden demnach als Eingangsgrößen mindestens die erste Ableitung des jeweiligen Fahrzustandes, das heißt die Änderungsrate des Fahrzustandes, und die zweite zeitliche Ableitung, also die Änderungsrate der ersten Ableitung des Fahrzustandes, berücksichtigt. Die Eingangsgrößen, das heißt die zeitlichen Ableitungen des jeweiligen Fahrzustandes, werden jeweils in linearen Modellen einer Ordnung der Anzahl der Eingangsgrößen des betreffenden Fahrzustandes in Beziehung gesetzt. Beispielsweise werden bei einer Ausführungsform der Erfindung mit zwei Eingangsgrößen pro Fahrzustand lineare Modelle zweiter Ordnung gebildet. Bei Berücksichtigung auch höherer Ableitungen des jeweiligen Fahrzustandes als Eingangsgrößen werden entsprechend höhere Ordnungen der linearen Modelle gebildet. Das lineare Modell gemäß der Erfindung ist dabei ein dynamisches Modell, welches das bewegte System bezüglich der Rotationsbewegung und bezüglich der longitudinalen Bewegung über den Prognosezeitraum beschreibt.

Die Eingangsgrößen werden erfindungsgemäß mit vorgegebenen Zeitkostanten in Beziehung gesetzt, wobei aus dem linearen Modell eine zeitbezogene Funktionsvorschrift für den Verlauf einer Eingangsgröße ermittelt wird. Durch die Annahme eines linearen Modells kann dabei eine kontinuierliche Funktionsvorschrift für voraussichtliche Prognosewerte der jeweiligen Eingangsgröße mit hoher Genauigkeit ermittelt werden. Die zeitbezogene Funktionsvorschrift für den rotatorischen Fahrzustand und/oder den longitudinalen Fahrzustand werden in einem weiteren Verfahrensschritt durch analytische Integration der aus dem linearen Modell hergeleiteten zeitbezogenen Funktionsvorschriften für den Verlauf einer Eingangsgröße bestimmt.

Der Erfindung liegt die Erkenntnis zugrunde, dass sich der für die Fahrwegprognose herangezogene rotatorische Fahrzustand, beispielsweise die Gierrate des Fahrzeuges, in der Regel nur kurzfristig bei Kurvenfahrten ändert und anschließend rasch wieder abklingt. Über längere Zeiträume sind Geradeausfahrten die Regel. Außerdem verschwindet über einen größeren Betrachtungszeitraum der zeitliche Mittelwert der Fahrzeuggierrate. Auch bei einer Betrachtung longitudinaler Fahrzustände über einen längeren Zeitraum ändert sich die Fahrzeugbeschleunigung nur kurzfristig während Beschleunigungs- und Verzögerungsphasen. Auch die Beschleunigung hält dabei nur für einen vergleichsweise kurzen Zeitraum an und klingt danach wieder ab. Solche instationären Phasen der Fahrt sind in der Regel auf kurze Zeiträume beschränkt und zeitlich von anderen Phasen isoliert, da ein Fahrzeug nur für eine beschränkte Zeit beschleunigen kann und auch Kurvenfahrten praktisch immer, das heißt mit Ausnahme einer vollständigen Kreisfahrt, zeitlich begrenzt sind. Ein glockenförmiger zeitlicher Verlauf und zudem der abklingende Charakter des Fahrzustands (rotatorischer oder longitudinaler Fahrzustand) erlaubt die Annahme eines linearen dynamischen Modells, aus dem erfindungsgemäß eine kontinuierliche Funktionsvorschrift für voraussichtliche Prognosewerte der im linearen Modell berücksichtigten Eingangsgrößen, das heißt den voraussichtlichen Verlauf der Eingangsgröße, ermittelt wird. Diese kontinuierliche Funktionsvorschrift betrifft eine Ableitung der den Fahrzustand beschreibenden Größe, welche letztlich für eine numerische Integration zur Ermittlung der Fahrwegprognose heran gezogen wird. Es kann demnach durch eine analytische Integration der Funktionsvorschrift für den voraussichtlichen Verlauf der Ableitung des Fahrzustandes eine zeitbezogene Funktionsvorschrift für den bei der numerischen Integration herangezogenen Fahrzustand ermittelt werden. Auf diese Weise wird eine genaue Fahrwegprognose ermöglicht, welche zugleich Änderungen der Fahrzustände während instationären Betriebszustände Rechnung trägt.

Die vorgegeben Zeitkonstanten zur Betrachtung des linearen dynamischen Modells werden vorgegeben und werden beispielsweise durch Versuche ermittelt und optimiert. Dabei können die vorgegebenen Zeitkonstanten einem typischen Fahrverhalten eines Fahrers Rechnung tragen oder auf weitere Bedürfnisse abgestimmt werden. In einer vorteilhaften Ausführungsform der Erfindung liegen die Zeitkonstanten in einem Interwall von 0,3s bis 15,0s. Als besonders vorteilhaft haben sich Zeitkonstanten im Bereich von 0,5s erwiesen.

Eine erfindungsgemäße Prognoseeinrichtung zur Durchführung des erfindungsgemäßen Verfahrens weist vorteilhaft einen Messwerteingang zum Anschluss an eine Fahrzeugsensorik des Fahrzeuges auf. Durch den Anschluss an die Fahrzeugsensorik können der Prognoseeinrichtung laufend Messwerte der für die Fahrwegprognose berücksichtigten Größen zugeleitet werden. Die Fahrzeugsensorik versorgt oft auch weitere Fahrerassistenzsysteme des Fahrzeuges mit den dort jeweils benötigten Messgrößen und ist mit entsprechenden Sensoren ausgestattet. Die Prognoseeinrichtung kann daher ohne eigens für die Prognose des voraussichtlichen Fahrwegs zu installierende Sensoren betrieben werden, beispielsweise als Zusatzmodul von Fahrassistenzsystemen wie adaptive Geschwindigkeitsregelungen (ACC) oder Notbremssysteme (AEB).

In einer vorteilhaften Ausführungsform der Erfindung werden aus dem linearen Modell die sich mit den aktuellen Eingangsgrößen ergebenden abhängigen Variablen hergeleitet und bei der Bestimmung der zeitbezogenen Funktionsvorschriften als Gewichtungsfaktoren berücksichtigt. Die Gewichtungsfaktoren bestimmen sowohl die zeitbezogene Funktionsvorschrift für voraussichtliche Prognosewerte der jeweiligen Eingangsgröße als auch die durch Integration dieser Funktionsvorschrift ermittelte zeitbezogene Vorschrift für den rotatorischen beziehungsweise longitudinalen, prädizierten Fahrzustand. Die Gewichtungsfaktoren, welche sich zwingend aus den aktuellen Eingangsgrößen unter Berücksichtigung der vorgegebenen Zeitkonstanten ergeben, werden mit jeder Erfassung neuer Messwerte aktualisiert, wodurch eine zuverlässige und sehr genaue Fahrwegprognose ermöglicht wird.

Die Eingangsgrößen werden aus den zugeführten rotatorischen bzw. longitudinalen Messwerten hergeleitet. Dabei können Messwerte unmittelbar zu den gewünschten Eingangsgrößen aufgenommen werden oder die Eingangsgröße auf der Grundlage der Messwerte geschätzt werden. In bevorzugter Ausführungsform der Erfindung werden zu jeder der im linearen Modell berücksichtigten Eingangsgrößen, das heißt sämtlichen berücksichtigten Ableitungen des für die numerische Integration berücksichtigten Fahrzustandes, Messwerte erfasst.

In bevorzugter Ausführungsform der Erfindung wird als longitudinaler Fahrzustand für die numerische Integration die Geschwindigkeit des Fahrzeugs berücksichtigt, wobei als Eingangsgrößen der Fahrwegprognose die Beschleunigung und ein Längsruck aus Messwerten bestimmt oder geschätzt werden. Unter einem Längsruck ist dabei die Änderungsrate der Beschleunigung zu verstehen, das heißt die zeitliche Ableitung der Beschleunigung. Werden die Beschleunigung und der Längsruck in einem linearen Modell zweiter Ordnung erfindungsgemäß in Beziehung gesetzt, so kann der Verlauf der Geschwindigkeit des Fahrzeugs genau prognostiziert werden. Zusätzlich zu der Änderung der prädizierten Geschwindigkeit während des betrachteten Zeitintervalls wird die Geschwindigkeit zum Ausgangspunkt der Fahrwegprognose berücksichtigt und zum Wert der prädizierten Geschwindigkeit addiert. Diese Startgeschwindigkeit steht stets durch die Messwerte zur Verfügung und kann alternativ aus den zur Verfügung stehenden Eingangsgrößen ermittelt werden. Der Prädiktionshorizont, welcher bei der numerischen Integration berücksichtigt wird, beträgt vorteilhaft 3 Sekunden bis 5 Sekunden.

Als prädizierter rotatorischer Fahrzustand wird bei der numerischen Integration vorteilhaft ein Ausrichtungswinkel des Fahrzeugs heran gezogen. Als Eingangsgrößen der Fahrwegprognose, welche in einem linearen Modell in Beziehung gesetzt werden, finden eine gemessene Gierrate und eine Gierbeschleunigung als Ableitung der gemessenen Gierrate Einfluss. Die Gierrate ist dabei die Geschwindigkeit der Drehung eines Fahrzeugs um seine Hochachse. Die Gierrate wird bevorzugt mittels eines entsprechenden Drehratensensors am Fahrzeug ermittelt, welcher Teil der Fahrzeugsensorik ist.

In der besonders bevorzugten Ausführungsform der Erfindung werden die Geschwindigkeit des Fahrzeugs als longitudinaler Fahrzustand und der Ausrichtungswinkel des Fahrzeugs als rotatorischer Fahrzustand ermittelt und bei der numerischen Integration berücksichtigt.

Ausführungsbeispiele der Erfindung sind nachstehend näher erläutert. Es zeigen:

Fig. 1 einen elektrischen Leitungsplan eines Ausführungsbeispiels einer Prognoseeinrichtung in einem Fahrzeug,

Fig. 2 ein Flussdiagramm eines Ausführungsbeispiels eines Verfahrens zur Fahrwegprognose,

Fig. 3. eine grafische Darstellung des zeitlichen Verlaufs der Gierrate,

4

Fig. 4.    einen Ausschnitt des Intervalls IV - IV in Fig. 3,

Fig. 5    eine grafische Darstellung des prognostizierten Fahrwegs eines Fahrzeugs.

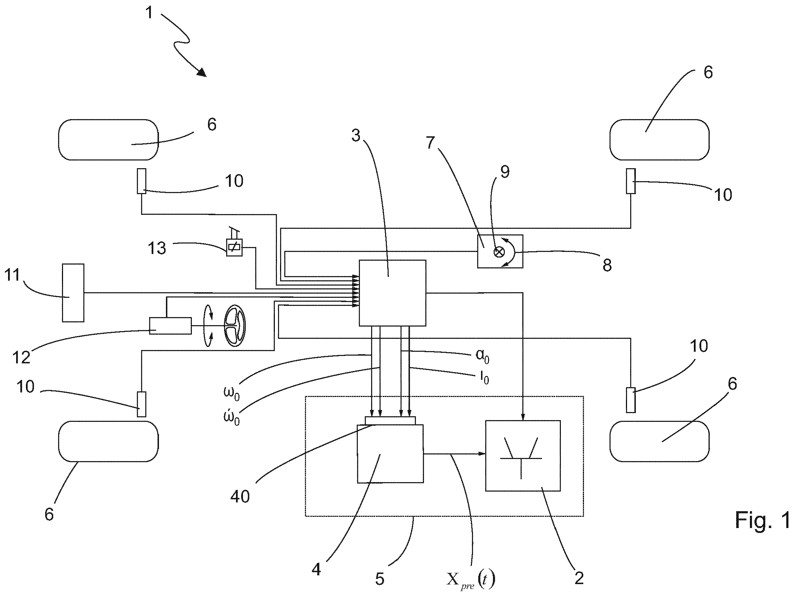

Fig. 1 zeigt einen elektrischen Leitungsplan eines mit einem oder mehreren Fahrassistenzsystemen ausgestatteten Kraftfahrzeugs 1. Die Fahrassistenzsysteme umfassen ein zentrales Steuergerät 2, dem von einer Fahrzeugsensorik 3 laufend gemessene Informationen eingegeben werden. Das Steuergerät 2 kontrolliert solche Fahrassistenzsysteme, welche auf die Prognose des voraussichtlichen Fahrwegs des Fahrzeugs zurückgreifen. Hierzu ist dem Steuergerät 2 eine Prognoseeinrichtung 4 zugeordnet, welche dem Steuergerät 2 sein Prognoseergebnis $X_{pre}(t)$ mitteilt. Die Prognoseeinrichtung 4 ist im gezeigten Ausführungsbeispiel ein Modul des Steuergeräts 2 innerhalb einer Zentralelektronik 5.

Das Steuergerät 2 analysiert anhand der eingegebenen Information das Fahrverhalten des Fahrzeugs. Weicht das Fahrverhalten des Fahrzeugs 1 von einem Sollverhalten ab, erfolgt ein Regeleingriff an den Bremsen eines oder mehrer Räder 6 und/oder in das Motormanagement, wobei auf den Antrieb eingewirkt wird und beispielsweise das Drehmoment geändert wird. Das Fahrassistenzsystem, welches die Prognose des voraussichtlichen Fahrwegs des Fahrzeugs 1 berücksichtigt, ist beispielsweise eine adaptive Geschwindigkeitsregelung (ACC). Die ACC-Regelung berücksichtigt ferner von der Fahrzeugsensorik 3 übertragene Informationen bezüglich des Antriebs des Fahrzeugs 1 oder Informationen einer Fahrdynamiksteuerung, beispielsweise einer ESP-Steuerung, welche über einen CAN-Datenbus übertragen werden. Das Steuergerät 2 setzt die von dem Fahrassistenzsystem, nämlich hier der ACC-Regelung, geforderten Beschleunigungen in Antriebs- und/oder Bremsmomente um.

Die Fahrzeugsensorik 3 erfasst rotatorische Größen, welche von der Drehbewegung des Fahrzeugs 1 beeinflusst sind, über einen Drehratensensor 7 am Fahrzeug 1. Der Drehratensensor 7 spricht dabei auf Drehbewegungen in Richtung des Pfeils 8 um eine Hochachse 9 des Fahrzeugs 1 an. Aus dem Messsignal des Drehratensensors 7 lassen sich durch zeitbezogene Auswertung unterschiedliche Messgrößen mit Aussage über die Drehbewegung des Fahrzeugs um die Hochachse 9, d. h. die Gierbewegung, erzeugen.

Die Fahrzeugsensorik 3 nimmt ferner longitudinale Messgrößen auf, welche auf die Längsbewegung des Fahrzeugs 1 bezogen sind. Hierzu sind entsprechende Sensoren vorgesehen. Im Ausführungsbeispiel sind als Sensoren zur Aufnahme longitudinaler Messgrößen Drehzahlmesser 10 an den Rädern 6 angeordnet. Mit der Raddrehzahl bzw. Radgeschwindigkeit lassen sich Rückschlüsse auf die Fahrtgeschwindigkeit und weitere longitudinale Größen ziehen.

Die Fahrzeugsensorik 3 umfasst ferner eine optoelektronische Detektionseinrichtung, nämlich einen Laserscanner 11, welche im gezeigten Ausführungsbeispiel im Frontbereich des Fahrzeugs 1 montiert ist. Mittels des Laserscanners 11 werden Informationen über die Umgebung des fahrenden Kraftfahrzeugs 1 ermittelt, beispielsweise Hindernisse oder bewegliche Objekte wie andere am Straßenverkehr teilnehmende Fahrzeuge. An Stelle eines Laserscanners 11 kann eine andere Sensorik zur Erfassung visueller Information vorgesehen sein, beispielsweise ein im Rahmen eines kamerabasierten Fahrassistenzsystems. Ist einem solchen kamerabasierten oder optoelektronischen Fahrassistenzsystem die Prognoseeinrichtung 4 zugeordnet, so kann das kamerabasierte oder optoelektronische Fahrassistenzsystem unter Berücksichtigung des voraussichtlichen Fahrwegs des eigenen Fahrzeugs und auch der Bewegung anderer Fahrzeuge geeignete Regelszenarien und Trajektorien berechnen und bedarfsweise durch Regeleingriffe reagieren.

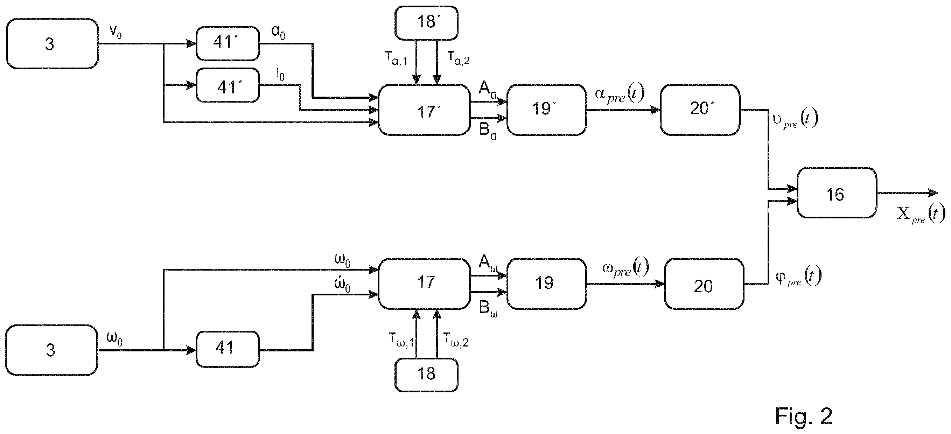

Ein Messwerteingang 40 der Prognoseeinrichtung 4 ist an die Fahrzeugsensorik 3 angeschlossen und empfängt longitudinale Eingangsgrößen $\alpha_0$, $\iota_0$ und rotatorische Eingangsgrößen $\omega_0$, $\omega_0$ wie unten anhand von Fig. 2 noch näher erläutert ist.

Die Fahrzeugsensorik 3 ermittelt im gezeigten Ausführungsbeispiel weitere Messgrößen mit Aussage über das Fahrverhalten des Fahrzeugs 1, nämlich beispielsweise solche Einflüsse, welche vom Fahrer des Fahrzeugs ausgehen. So sind ein Lenkwinkelgeber 12 und ein Bremssignalgeber 13 Teil der Fahrzeugsensorik 3. Ein Lenkwinkelsignal des Lenkwinkelgebers 12 oder ein Bremswunsch über dem Bremssignalgeber 13 werden im Rahmen bestimmter Fahrassistenzsysteme verarbeitet und können auch zur Verfeinerung der Messgrößen im Rahmen der Fahrwegprognose berücksichtig werden.

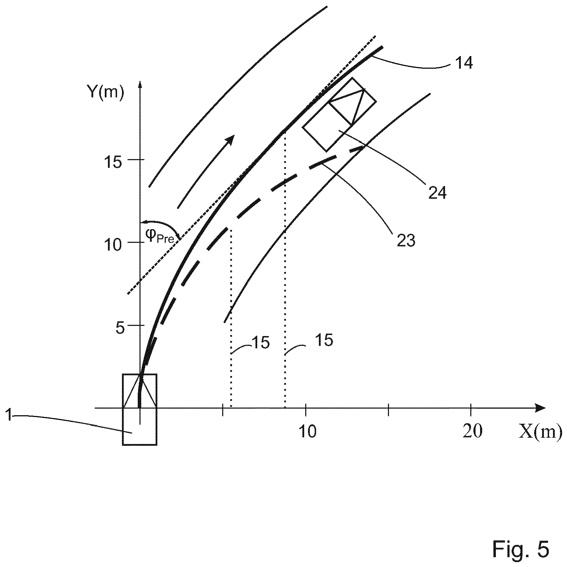

Bei der Prognose des voraussichtlichen Fahrwegs eines fahrenden Kraftfahrzeugs werden über einen Prädiktionshorizont von beispielsweise 3 bis 5 Sekunden laufend diskrete Positionsinformationen 15 zu jeweiligen Zeitpunkten ermittelt, welche in Ihrer Reihenfolge auf dem voraussichtlichen Fahrweg 14 (Fig. 5) liegen.

Die Berechnung einzelner Prognosepositionen 15 auf dem Fahrweg 14 wird nachstehend anhand des Flussdiagramms in Fig. 2 näher erläutert. Die diskreten Positionsinformationen 15 zu bestimmten Zeitpunkten sind das Prognoseergebnis $X_{pre}(t)$ einer numerischen Integration 16 eines dynamischen Fahrzeugmodells. Dabei werden sowohl die Geschwindigkeit $v_{Pre}$ des Fahrzeugs 1 als longitudinaler Fahrzustand als auch der Ausrichtungswinkel $\varphi_{Pre}$ des Fahrzeugs 1 als rotatorischer Fahrzustand gem. dem folgenden Integral berücksichtigt:

$$\mathrm{X}_{pre}(t) = \int_0^t v_{pre}(\tau) \begin{pmatrix} \cos(\varphi_{pre}(\tau)) \\ \sin(\varphi_{pre}(\tau)) \end{pmatrix} d\tau$$

Aus diesem Integral ergibt sich die folgende Näherungsformel für das Prognoseergebnis als Summe von Positionsinformationen 15:

$$\mathrm{X}_{pre}(t) \approx \sum_{\kappa=0}^{T/\Delta t} \left[ v_{pre}(\kappa\Delta t) \begin{pmatrix} \cos(\varphi_{pre}(\kappa\Delta t)) \\ \sin(\varphi_{pre}(\kappa\Delta t)) \end{pmatrix} \right]$$

In dieser Gleichung bezeichnet $\Delta t$ zeitdiskrete Integrationsschritte und T den Prädiktionshorizont von vorzugsweise 3 bis 5 Sekunden.

Zur Bestimmung einerseits des rotatorischen Fahrzustandes, das heißt dem Ausrichtungswinkel $\varphi_{Pre}$ des Fahrzeugs 1, als auch dem longitudinalen Fahrzustands, das heißt der Geschwindigkeit $v_{Pre}$, wird jeweils eine zeitbezogene Funktionsvorschrift $\varphi_{pre}(t)$ für den Ausrichtungswinkel und eine des zeitbezogene Funktionsvorschrift $v_{pre}(t)$ für die Geschwindigkeit ermittelt.

Zur Ermittlung der Funktionsvorschriften für den (jeweiligen) Fahrzustand werden zunächst jeweils rotatorische bzw. longitudinale Eingangsgrößen $\omega_0$, $\dot\omega_0$, $\alpha_0$, $\iota_0$ zu mindestens zwei zeitlichen Ableitungen des betreffenden Fahrzustands aus Messwerten ermittelt und die Eingangsgrößen im linearen Modellen einer Ordnung entsprechend der Anzahl der Eingangsgrößen des betreffenden Fahrzustands zeitlich diskret mit vorgegebenen Zeitkonstanten $\tau_{\omega,1}$, $\tau_{\omega,2}$, $\tau_{\alpha,1}$, $\tau_{\alpha,2}$ in Beziehung gesetzt.

Zur Ermittlung der kontinuierlichen Funktionsvorschrift für den rotatorischen Fahrzustand werden die momentane Gierrate $\omega_0$ und die Gierbeschleunigung $\dot\omega_0$ aus Messwerten der Fahrzeugsensorik 3 ermittelt. Der Index 0 bezeichnet in sämtlichen nachfolgend erwähnten Gleichungen einen momentanen Messwert der entsprechenden Größe. Die momentane Gierrate $\omega_0$ wird im gezeigten Ausführungsbeispiel als Messwert von der Fahrzeugsensorik 3 bereit gestellt. Die momentane Gierbeschleunigung $\dot\omega_0$ wird in einer Schätzung 41 anhand der Messwerte zur Gierrate $\omega_0$ ermittelt. Die Gierrate ist dabei die erste zeitliche Ableitung des Ausrichtungswinkels des Fahrzeugs und die Gierbeschleunigung die zweite zeitliche Ableitung des Ausrichtungswinkels, welche als Eingangsgrößen der Fahrwegprognose im Verknüpfungsschritt 17 in einem linearen Modell zweiter Ordnung gemäß der folgenden Gleichung in Beziehung gesetzt werden.

$$\begin{pmatrix} \omega_0 \\ \dot\omega_0 \end{pmatrix} = \begin{bmatrix} 1 & 1 \\ -1/\tau_{\omega,1} & -1/\tau_{\omega,2} \end{bmatrix} * \begin{pmatrix} A_\omega \\ B_\omega \end{pmatrix}$$

Dabei werden Zeitkonstanten $\tau_{\omega,1}$, $\tau_{\omega,2}$ aus einer Vorgabe 18, beispielsweise einem Speicherelement, vorgegeben. Die Zeitkonstanten $\tau_{\omega,1}$, $\tau_{\omega,2}$ liegen dabei jeweils in einem Zeitintervall von 0,3 s bis 15,0 s, vorzugsweise etwa 0,5 s.

Aus dem zeitdiskreten linearen Modell werden die sich mit den aktuellen Eingangsgrößen, d. h. der direkt gemessenen oder aus Messwerten ermittelten aktuellen Gierrate und Gierbeschleunigung, ergebenden abhängigen Variablen im linearen Modell hergeleitet, welche bei der Bestimmung der zeitbezogenen Funktionsvorschriften als Gewichtungsfaktoren $A_\omega$, $B_\omega$ berücksichtigt werden:

$$\begin{pmatrix} A_\omega \\ B_\omega \end{pmatrix} = \frac{1}{\tau_{\omega,2} - \tau_{\omega,1}} * \begin{bmatrix} -\tau_{\omega,1} & -\tau_{\omega,1}\tau_{\omega,2} \\ \tau_{\omega,2} & \tau_{\omega,1}\tau_{\omega,2} \end{bmatrix} * \begin{pmatrix} \omega_0 \\ \dot\omega_0 \end{pmatrix}.$$

Die Gewichtungsfaktoren $A_\omega$, $B_\omega$ werden mit jeder Erfassung neuer Messwerte aktualisiert.

In einem Ermittlungsschritt 19 wird mit den aktuellen Gewichtungsfaktoren $A_\omega$, $B_\omega$ eine zeitbezogene Funktionsvorschrift für den voraussichtlichen Verlauf einer Eingangsgröße des linearen Modells ermittelt, nämlich hier der Gierrate. Unter der Annahme des linearen Modells kann die voraussichtliche Gierrate $\omega_{pre}(t)$ als kontinuierliche Funktionsvorschrift wie folgt bestimmt werden:

$$\omega_{pre}(t) = A_\omega \exp(-t/\tau_{\omega,1}) + B_\omega \exp(-t/\tau_{\omega,2})$$

Die Funktionsvorschrift $\omega_{pre}(t)$ für die Prädiktion der Gierrate wird in einem Integrationsschritt 20 analytisch integriert, um so die zeitbezogene Funktionsvorschrift $\varphi_{pre}(t)$ für den Ausrichtungswinkel zu erhalten:

$$\varphi_{pre}(t) = A_\omega \tau_{\omega,1}(1 - \exp(-t/\tau_{\omega,1})) + B\omega \tau_{\omega,2}(1 - \exp(-t/\tau_{\omega,2}))$$

Entsprechend der Ermittlung der Funktionsvorschrift für den Ausrichtungswinkel wird die Funktionsvorschrift $\upsilon_{pre}(t)$ für die voraussichtliche Geschwindigkeit des Fahrzeugs ermittelt.

Hierzu werden im Verknüpfungsschritt 17' die momentane Beschleunigung $\alpha_0$ und die Größe eines momentanen Längsrucks $\iota_0$ berücksichtigt, welche aus den Informationen der Fahrzeugsensorik 3 zur Verfügung stehen. Dabei werden über eine Schätzung 41' anhand der Messwerte der momentanen Geschwindigkeit v0 die Eingangsgrößen der momentanen Beschleunigung $\alpha_0$ und des Längsrucks $\iota_0$ ermittelt. Die Beschleunigung und der Längsruck, welcher die Änderungsrate der Beschleunigung ist und damit die zweite Ableitung der Geschwindigkeit, werden unter Berücksichtigung Zeitkonstanten $\tau_{\alpha,1}$, $\tau_{\alpha,2}$ in einem linearen Modell in Beziehung gesetzt. Die vorgegebenen Zeitkonstanten $\tau_{\alpha,1}$, $\tau_{\alpha,2}$ werden dabei, wie oben bezüglich des rotatorischen Fahrzustandes erläutert, aus einer Vorgabe 18' beigezogen. Aus dem linearen Modell zweiter Ordnung zum longitudinalen Fahrzustand ergibt sich die folgende Beziehung zur Ermittlung der longitudinalen Gewichtungsfaktoren $A_\alpha$, $B_\alpha$, für die Bestimmung des longitudinalen Fahrzustandes:

$$\begin{pmatrix} \alpha_0 \\ \iota_0 \end{pmatrix} = \begin{bmatrix} 1 & 1 \\ -1/\tau_{\alpha,1} & -1/\tau_{\alpha,2} \end{bmatrix} * \begin{pmatrix} A_\alpha \\ B_\alpha \end{pmatrix}$$

Durch Umstellung der vorstehenden Beziehung in einem linearen System ergeben sich folgende Gewichtungsfaktoren:

$$\begin{pmatrix} A_\alpha \\ B_\alpha \end{pmatrix} = \frac{1}{\tau_{\alpha,2} - \tau_{\alpha,1}} * \begin{bmatrix} -\tau_{\alpha,1} & -\tau_{\alpha,1}\tau_{\alpha,2} \\ \tau_{\alpha,2} & \tau_{\alpha,1}\tau_{\alpha,2} \end{bmatrix} * \begin{pmatrix} \alpha_0 \\ \iota_0 \end{pmatrix}.$$

Die Gewichtungsfaktoren $A_\alpha$, $B_\alpha$, werden bei jeder Aufnahme von Messwerten aktualisiert.

In einem nachfolgenden Ermittlungsschritt 19' wird unter Berücksichtigung der Gewichtungsfaktoren für den longitudinalen Fahrzustand eine zeitbezogene Funktionsvorschrift für die voraussichtliche Beschleunigung nach der folgenden Formel ermittelt:

$$\alpha_{pre}(t) = A_\alpha \exp(-t/\tau_{\alpha,1}) + B_\alpha \exp(-t/\tau_{\alpha,2}).$$

Die zeitbezogene Funktionsvorschrift für den voraussichtlichen Verlauf der Längsbeschleunigung wird in einem nachfolgenden Integrationsschritt 20 analytisch integriert, woraus sich die nachfolgende Beziehung für die voraussichtliche Geschwindigkeit $\upsilon_{pre}(t)$ ergibt:

$$\upsilon_{pre}(t) = A_\alpha \tau_{\alpha,1}(1 - \exp(-t/\tau_{\alpha,1})) + B_\alpha \tau_{\alpha,2}(1 - \exp(-t/\tau_{\alpha,2})) + \upsilon_0$$

In der vorgenannten Gleichung wird zu den prognostizierten Geschwindigkeitszu- bzw. abnahmen die Grundgeschwindigkeit $\upsilon_0$ des Fahrzeugs zum jeweiligen Messzeitpunkt addiert.

Unter Heranziehung der ermittelten Funktionsvorschriften für die voraussichtliche Geschwindigkeit und/oder für die voraussichtlichen Ausrichtungswinkel erfolgt die numerische Integration 16 nach dem oben erwähnten Integral für das Prognoseergebnis $X_{pre}(t)$. Dabei werden sowohl rotatorische als auch longitudinale Veränderungen bei instationären Fahrzuständen berücksichtigt. In nicht dargestellten Ausführungsbeispielen werden zu einzelnen Fahrzuständen erfindungsgemäß Funktionsvorschriften innerhalb linearer Modelle ermittelt, während andere Fahrzustände konstant angenommen werden. Dabei kann der Aufwand zur Erfassung von Messwerten reduziert werden.

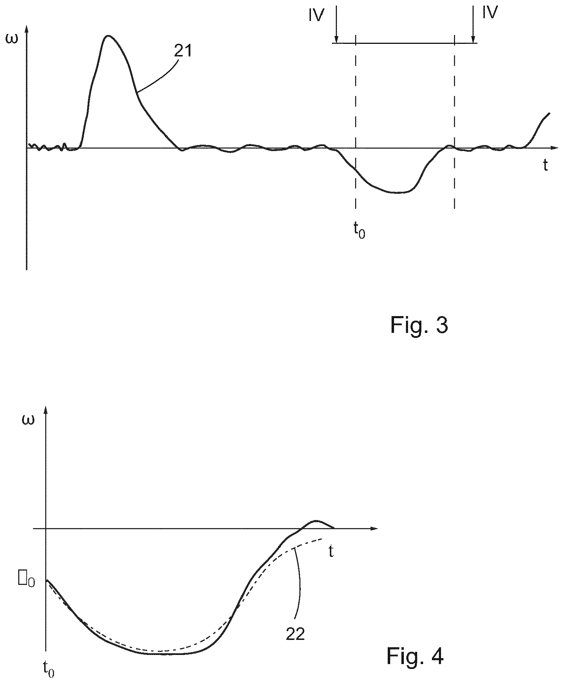

Fig. 3 zeigt einen zeitlichen Verlauf der Gierrate $\omega$. Daraus wird deutlich, dass die Gierrate $\omega$ bei Geradeaus-

fahrten im Wesentlichen unveränderlich ist und kaum Drehbewegungen im Fahrzeug auftreten. Änderungen der Gierrate $\omega$ ergeben sich beispielsweise durch eine Kurvenfahrt, welche sich durch einen positiven Ausschlag 21 äußert. Im Zeitintervall IV-IV, welches in Fig. 4 vergrößert dargestellt ist, durchfährt das Fahrzeug eine Rechtskurve, was sich durch einen negativen Ausschlag in der Gierrate $\omega$ äußert.

Die Ausschläge in dem Gierratenverlauf werden zeitlich voneinander isoliert betrachtet. Über längere Zeiträume klingt das Gierratensignal immer wieder auf Null ab. Die Form der Ausschläge kann durch ein glockenförmiges Signal 22 angenähert werden. Der glockenförmige Verlauf des Gierratensignals ergibt sich regelmäßig bei Kurvenfahrten aus dem Umstand, dass die Gierrate des Fahrzeuges beim Eintreten in die Kurve aufklingt und beim Ausfahren aus der Kurve abklingt. Aufgrund des nur zeitweilig und glockenförmig verlaufenden Ausschlags der Gierrate $\omega$ kann für die Prognose des voraussichtlichen Fahrwegs die Antwort eines dynamischen Systems zweiter Ordnung verwendet werden.

Der beschriebene Ansatz zur Prognose des voraussichtlichen Fahrwegs unter Annahme eines linearen Modells mindestens zweiter Ordnung ergibt erheblich genauere Prognoseergebnisse als herkömmliche Prognosealgorithmen. In Fig. 5 ist der voraussichtliche Fahrweg 14 im Vergleich zu einer strichliert dargestellten herkömmlichen Fahrwegprädiktion 23 dargestellt. Bei der herkömmlichen Fahrwegprädiktion 23 ergibt sich ein Verlauf des prognostizierten Fahrwegs mit einem erheblich engeren Krümmungsradius, da der Einfluss von Veränderungen des Fahrzustands während instationärer Phasen nicht berücksichtigt wird. Bei dem erfindungsgemäß prognostizierten Fahrweg 14 unter Annahme eines linearen dynamischen Modells zweiter oder höherer Ordnung werden dynamische Änderungen des Fahrzustands während des Prädiktionsintervalls berücksichtigt. Auf diese Weise können insbesondere auch solche Fahrassistenzsysteme, welche kooperativ arbeiten, das heißt die Bewegung von Zielfahrzeugen 24 berücksichtigen, genauere und realistische Ausweichszenarien ermitteln.

## Patentansprüche

1. Verfahren zur Prognose des voraussichtlichen Fahrweges (14) eines fahrenden Fahrzeugs (1) durch numerische Integration (16) eines dynamischen Fahrzeugmodells mit wenigstens einem von der Drehbewegung des Fahrzeugs (1) beeinflussten rotatorischen Fahrzustand ($\varphi_{Pre}$) und wenigstens einem von der Längsbewegung des Fahrzeugs (1) beeinflussten longitudinalen Fahrzustand ($v_{Pre}$),
   **dadurch gekennzeichnet, dass**
   zeitbezogene Funktionsvorschriften ($\varphi_{Pre}(t)$, $v_{Pre}(t)$) für einen prädizierten rotatorischen Fahrzustand ($\varphi_{Pre}$) und/oder einen prädizierten longitudinalen Fahrzustand ($v_{Pre}$) bestimmt werden und durch numerische Integration dieser Funktionsvorschriften ($\varphi_{Pre}(t)$, $v_{Pre}(t)$) Werte des jeweiligen Fahrzustands ($\varphi_{Pre}$, $v_{Pre}$) zu bestimmten Zeitpunkten prädiziert werden, wobei die zeitbezogene Funktionsvorschrift ($\varphi_{Pre}(t)$, $v_{Pre}(t)$) eines prädizierten Fahrzustands bestimmt wird, indem jeweils rotatorische bzw. longitudinale Eingangsgrößen ($\omega_0$, $\omega_0$, $\alpha_0$, $\iota_0$) zu jeweils mindestens zwei zeitlichen Ableitungen des betreffenden Fahrzustands ($\varphi_{Pre}$, $v_{Pre}$) aus Messwerten ermittelt werden und die Eingangsgrößen ($\omega_0$, $\omega_0$, $\alpha_0$, $\iota_0$) in linearen dynamischen Modellen einer Ordnung entsprechend der Anzahl der Eingangsgrößen ($\omega_0$, $\omega_0$, $\alpha_0$, $\iota_0$) des betreffenden Fahrzustands ($\varphi_{Pre}$, $v_{Pre}$) unter Heranziehung vorgegebener Zeitkonstanten ($\tau_{\omega,1}$, $\tau_{\omega,2}$, $\tau_{\alpha,1}$, $\tau_{\alpha,2}$) in Beziehung gesetzt werden und aus dem linearen Modell eine zeitbezogene Funktionsvorschrift ($\omega_{Pre}(t)$, $\alpha_{Pre}(t)$) für Prognosewerte, das heißt voraussichtliche Werte, der jeweiligen Eingangsgröße ermittelt wird, und indem die Funktionsvorschrift ($\omega_{Pre}(t)$, $\alpha_{Pre}(t)$) für die Prognosewerte der Eingangsgröße analytisch integriert wird.

2. Verfahren nach Anspruch 1,
   **dadurch gekennzeichnet, dass**
   aus dem linearen dynamischen Modell die sich mit den aktuellen Eingangsgrößen ($\omega_0$, $\omega_0$, $\alpha_0$, $\iota_0$) ergebenden abhängigen Variablen hergeleitet werden und bei der Bestimmung der zeitbezogenen Funktionsvorschriften ($\varphi_{Pre}(t)$, $v_{Pre}(t)$, $\omega_{Pre}(t)$, $\alpha_{Pre}(t)$) als Gewichtungsfaktoren ($A_\omega$, $B_\omega$, $A_\alpha$, $B_\alpha$) berücksichtigt werden, wobei die Gewichtungsfaktoren ($A_\omega$, $B_\omega$, $A_\alpha$, $B_\alpha$) mit jeder Erfassung neuer Messwerte aktualisiert werden.

3. Verfahren nach Anspruch 1 oder 2,
   **dadurch gekennzeichnet, dass**
   zu jeder Eingangsgröße ($\omega_0$, $\omega_0$, $\alpha_0$, $\iota_0$) Messwerte erfasst werden.

4. Verfahren nach einem der vorhergehenden Ansprüche,
   **dadurch gekennzeichnet, dass**
   als longitudinaler Fahrzustand für die numerische Integration die Geschwindigkeit ($v_{Pre}$) des Fahrzeugs (1) herangezogen wird, wobei als Eingangsgrößen ($\alpha_0$, $\iota_0$) der Fahrwegprognose die Beschleunigung ($\alpha_0$) ein Längsruck ($\iota_0$) aus Messwerten bestimmt oder anhand von Messwerten geschätzt werden.

5. Verfahren nach einem der vorhergehenden Ansprüche,
**dadurch gekennzeichnet, dass**
als rotatorischer Fahrzustand für die numerische Integration (16) ein Ausrichtungswinkel ($\varphi_{Pre}$) des Fahrzeugs (1) heran gezogen wird, wobei als Eingangsgrößen der Fahrwegprognose die Gierrate ($\omega_0$) und die Gierbeschleunigung ($\omega_0$) aus Messwerten bestimmt oder anhand von Messwerten geschätzt werden.

6. Verfahren nach einem der vorhergehenden Ansprüche,
**dadurch gekennzeichnet, dass**
die fahrzeugspezifisch vorgegebenen Zeitkonstanten ($\tau_{\omega,1}$, $\tau_{\omega,2}$, $\tau_{\alpha,1}$, $\tau_{\alpha,2}$) in einem Zeitintervall von 0,3s bis 15,0s liegen.

7. Prognoseeinrichtung zur Durchführung eines Verfahrens zur Prognose des voraussichtlichen Fahrweges (14) eines fahrenden Fahrzeugs (1) durch numerische Integration (16) eines dynamischen Fahrzeugmodells mit wenigstens einem von der Drehbewegung des Fahrzeugs (1) beeinflussten rotatorischen Fahrzustand ($\varphi_{Pre}$) und wenigstens einem von der Längsbewegung des Fahrzeugs (1) beeinflussten longitudinalen Fahrzustand ($v_{Pre}$), wobei die Prognoseeinrichtung (4) einen Messwerteingang (40) zum Anschluss an eine Fahrzeugsensorik (3) des Fahrzeugs (1) aufweist **dadurch gekennzeichnet, dass**
die Prognoseeinrichtung (4) geeignet ist, dass
zeitbezogene Funktionsvorschriften ($\varphi_{Pre}(t)$, $v_{Pre}(t)$) für einen prädizierten rotatorischen Fahrzustand ($\varphi_{Pre}$) und/oder einen prädizierten longitudinalen Fahrzustand ($v_{Pre}$) bestimmt werden und durch numerische Integration dieser Funktionsvorschriften ($\varphi_{Pre}(t)$, $v_{Pre}(t)$) Werte des jeweiligen Fahrzustands ($\varphi_{Pre}$, $v_{Pre}$) zu bestimmten Zeitpunkten prädiziert werden, wobei die zeitbezogene Funktionsvorschrift ($\varphi_{Pre}(t)$, $v_{Pre}(t)$) eines prädizierten Fahrzustands bestimmt wird, indem jeweils rotatorische bzw. longitudinale Eingangsgrößen ($\omega_0$, $\omega_0$, $\alpha_0$, $\iota_0$) zu jeweils mindestens zwei zeitlichen Ableitungen des betreffenden Fahrzustands ($\varphi_{Pre}$, $v_{Pre}$) aus Messwerten ermittelt werden und die Eingangsgrößen ($\omega_0$, $\omega_0$, $\alpha_0$, $\iota_0$) in linearen dynamischen Modellen einer Ordnung entsprechend der Anzahl der Eingangsgrößen ($\omega_0$, $\omega_0$, $\alpha_0$, $\iota_0$) des betreffenden Fahrzustands ($\varphi_{Pre}$, $v_{Pre}$) unter Heranziehung vorgegebener Zeitkonstanten ($\tau_{\omega,1}$, $\tau_{\omega,2}$, $\tau_{\alpha,1}$, $\tau_{\alpha,2}$) in Beziehung gesetzt werden und aus dem linearen Modell eine zeitbezogene Funktionsvorschrift ($\omega_{Pre}(t)$, $\alpha_{Pre}(t)$) für Prognosewerte, das heißt voraussichtliche Werte, der jeweiligen Eingangsgröße ermittelt wird, und indem die Funktionsvorschrift ($\omega_{Pre}(t)$, $\alpha_{Pre}(t)$) für die Prognosewerte der Eingangsgröße analytisch integriert wird.

8. Prognoseeinrichtung nach Anspruch 7,
**dadurch gekennzeichnet, dass**
die Prognoseeinrichtung (4) einem kamerabasierten oder optoelektronischen Fahrassistenzsystem zugeordnet oder in ein solches Fahrassistenzsystem integriert ist.

**Claims**

1. Method for predicting the expected travel path (14) of a moving vehicle (1) by numerical integration (16) of a dynamic vehicle model using at least one rotational travel state ($\varphi_{Pre}$), which is affected by the angular motion of the vehicle (1), and at least one longitudinal travel state ($v_{Pre}$), which is affected by the linear motion of the vehicle (1),
**characterized in that**
time-related function rules ($\varphi_{Pre}(t)$, $v_{Pre}(t)$) for a predicted rotational travel state ($\varphi_{Pre}$) and/or for a predicted longitudinal travel state ($v_{Pre}$) are determined, and values for the travel state concerned ($\varphi_{Pre}$, $v_{Pre}$) are predicted at specific points in time by numerical integration of said function rules ($\varphi_{Pre}(t)$, $v_{Pre}(t)$), wherein the time-related function rule ($\varphi_{Pre}(t)$, $v_{Pre}(t)$) of a predicted travel state is determined by obtaining respective rotational or longitudinal input variables ($\omega_0$, $\omega_0$, $\alpha_0$, $\iota_0$) for at least two time-derivatives of the travel state concerned ($\varphi_{Pre}$, $v_{Pre}$) from measured values, and relating the input variables ($\omega_0$, $\omega_0$, $\alpha_0$, $\iota_0$) in linear dynamic models of order equal to the number of input variables ($\omega_0$, $\omega_0$, $\alpha_0$, $\iota_0$) of the travel state concerned ($\varphi_{Pre}$, $v_{Pre}$) using specified time constants ($\tau_{\omega,1}$, $\tau_{\omega,2}$, $\tau_{\alpha,1}$, $\tau_{\alpha,2}$) and by determining from the linear model a time-related function rule ($\omega_{Pre}(t)$, $\alpha_{Pre}(t)$) for prediction values, i.e. expected values, for the input variable concerned, and by analytically integrating the function rule ($\omega_{Pre}(t)$, $\alpha_{Pre}(t)$) for the prediction values of the input variable.

2. Method according to Claim 1,
**characterized in that**
the dependent variables obtained using the instantaneous input variables ($\omega_0$, $\omega_0$, $\alpha_0$, $\iota_0$) are derived from the linear dynamic model and taken into account as weighting factors ($A_\omega$, $B_\omega$, $A_\alpha$, $B_\alpha$) in determining the time-related function

rules ($\varphi_{Pre}(t)$, $v_{Pre}(t)$, $\omega_{Pre}(t)$, $\alpha_{Pre}(t)$), wherein the weighting factors ($A_{\omega}$, $B_{\omega}$, $A_{\alpha}$, $B_{\alpha}$) are updated whenever a new measured value is acquired.

3. Method according to Claim 1 or Claim 2,
   **characterized in that**
   measured values are acquired for each input variable ($\omega_0$, $\dot{\omega}_0$, $\alpha_0$, $\iota_0$).

4. Method according to any of the preceding claims, **characterized in that**
   the speed ($v_{Pre}$) of the vehicle (1) is used as the longitudinal travel state for the numerical integration, wherein as the input variables ($\alpha_0$, $\iota_0$) for the travel-path prediction, the acceleration ($\alpha_0$) a sudden linear movement ($\iota_0$) are determined from measured values or estimated from measured values.

5. Method according to any of the preceding claims, **characterized in that**
   a bearing angle ($\varphi_{Pre}$) of the vehicle (1) is used as the rotational travel state for the numerical integration (16), wherein as the input variables for the travel-path prediction, the yaw rate ($\omega_0$) and the yaw acceleration ($\dot{\omega}_0$) are determined from measured values or estimated from measured values.

6. Method according to any of the preceding claims, **characterized in that**
   the vehicle-specific specified time constants ($\tau_{\omega,1}$, $\tau_{\omega,2}$, $\tau_{\alpha,1}$, $\tau_{\alpha,2}$) lie in a time range of 0.3s to 15.0s.

7. Prediction apparatus for implementing a method for predicting the expected travel path (14) of a moving vehicle (1) by numerical integration (16) of a dynamic vehicle model using at least one rotational travel state ($\varphi_{Pre}$), which is affected by the angular motion of the vehicle (1), and at least one longitudinal travel state ($v_{Pre}$), which is affected by the linear motion of the vehicle (1), wherein the prediction apparatus (4) comprises a measured-value input (40) for connecting to a vehicle-sensor unit (3) of the vehicle (1), **characterized in that**
   the prediction apparatus (4) is suitable for determining time-related function rules ($\varphi_{Pre}(t)$, $v_{Pre}(t)$) for a predicted rotational travel state ($\varphi_{Pre}$) and/or for a predicted longitudinal travel state ($v_{Pre}$), and predicting values for the travel state concerned ($\varphi_{Pre}$, $v_{Pre}$) at specific points in time by numerical integration of said function rules ($\varphi_{Pre}(t)$, $v_{Pre}(t)$), wherein the time-related function rule ($\varphi_{Pre}(t)$, $v_{Pre}(t)$) of a predicted travel state is determined by obtaining respective rotational or longitudinal input variables ($\omega_0$, $\dot{\omega}_0$, $\alpha_0$, $\iota_0$) for at least two time-derivatives of the travel state concerned ($\varphi_{Pre}$, $v_{Pre}$) from measured values, and relating the input variables ($\omega_0$, $\dot{\omega}_0$, $\alpha_0$, $\iota_0$) in linear dynamic models of order equal to the number of input variables ($\omega_0$, $\dot{\omega}_0$, $\alpha_0$, $\iota_0$) of the travel state concerned ($\varphi_{Pre}$, $v_{Pre}$) using specified time constants ($\tau_{\omega,1}$, $\tau_{\omega,2}$, $\tau_{\alpha,1}$, $\tau_{\alpha,2}$) and by determining from the linear model a time-related function rule ($\omega_{Pre}(t)$, $\alpha_{Pre}(t)$) for prediction values, i.e. expected values, for the input variable concerned, and by analytically integrating the function rule ($\omega_{Pre}(t)$, $\alpha_{Pre}(t)$) for the prediction values of the input variable.

8. Prediction apparatus according to Claim 7, **characterized in that**
   the prediction apparatus (4) is allocated to a camera-based or optoelectronic driver assistance system or is integrated in such a driver assistance system.

**Revendications**

1. Procédé de prévision de la trajectoire probable (14) d'un véhicule (1) en déplacement par intégration numérique (16) d'un modèle de véhicule dynamique avec au moins un état de déplacement rotatoire ($\varphi_{Pre}$) influencé par le mouvement de rotation du véhicule (1) et au moins un état de déplacement longitudinal ($V_{Pre}$) influencé par le mouvement longitudinal du véhicule (1),
   **caractérisé en ce que**
   des règles de fonction rapportées au temps ($\varphi_{Pre}(t)$, $V_{Pre}(t)$) sont définies pour un état de déplacement rotatoire ($\varphi_{Pre}$) prédit et/ou un état de déplacement longitudinal ($V_{Pre}$) prédit et les valeurs de l'état de déplacement ($\varphi_{Pre}$, $V_{Pre}$) respectif à des instants donnés sont prédites par intégration numérique de ces règles de fonction ($\varphi_{Pre}(t)$, $V_{Pre}(t)$), la règle de fonction rapportée au temps ($\varphi_{Pre}(t)$, $V_{Pre}(t)$) d'un état de déplacement prédit étant définie en déterminant respectivement des grandeurs d'entrée rotatoires ou longitudinales ($\omega_0$, $\overline{\omega}_0$, $\alpha_0$, $i_0$) pour respectivement au moins deux dérivées de l'état de déplacement ($\varphi_{Pre}$, $V_{Pre}$) concerné à partir de valeurs mesurées et en mettant les grandeurs d'entrée ($\omega_0$, $\overline{\omega}_0$, $\alpha_0$, $i_0$) en relation dans des modèles dynamiques linéaires d'un ordre correspondant au nombre de grandeurs d'entrée ($\omega_0$, $\overline{\omega}_0$, $\alpha_0$, $i_0$) de l'état de déplacement ($\varphi_{Pre}$, $V_{Pre}$) concerné en utilisant des constantes de temps prédéfinies ($T_{\omega.1}$, $T_{\omega.2}$, $T_{\alpha.1}$, $T_{\alpha.2}$) et en déterminant à partir du modèle linéaire une règle de fonction rapportée au temps ($\omega_{Pre}(t)$, $\alpha_{Pre}(t)$) pour les valeurs de prévision, c'est-à-dire les valeurs probables de la grandeur d'entrée respective, et en effectuant une intégration analytique de la règle de fonction ($\omega_{Pre}(t)$, $\alpha_{Pre}(t)$) pour les valeurs prévisionnelles de la grandeur d'entrée.

2. Procédé selon la revendication 1, **caractérisé en ce que** les variables dépendantes obtenues avec les grandeurs d'entrée ($\omega_0$, $\overline{\omega}_0$, $\alpha_0$, $i_0$) actuelles sont déduites du modèle dynamique linéaire et, lors de la définition, les règles de fonction rapportées au temps ($\varphi_{Pre}(t)$, $Vp_{re}(t)$, $\omega_{Pre}(t)$, $\alpha_{Pre}(t)$) sont prises en compte en tant que facteurs de pondération ($A_\omega$, $B_\omega$, $A_\alpha$, $B_\alpha$), les facteurs de pondération ($A_\omega$, $B_\omega$, $A_\alpha$, $B_\alpha$) étant actualisés avec chaque acquisition de nouvelles valeurs mesurées.

3. Procédé selon la revendication 1 ou 2, **caractérisé en ce que** des valeurs mesurées sont acquises pour chaque grandeur d'entrée ($\omega_0$, $\overline{\omega}_0$, $\alpha_0$, $i_0$).

4. Procédé selon l'une des revendications précédentes, **caractérisé en ce que** l'état de déplacement longitudinal utilisé pour l'intégration numérique est la vitesse ($V_{Pre}$) du véhicule (1), les grandeurs d'entrée ($\alpha_0$, $i_0$) de la prévision de la trajectoire définies à partir de valeurs mesurées ou estimées à l'aide de valeurs mesurées étant l'accélération ($\alpha_0$) un à-coup longitudinal (io) .

5. Procédé selon l'une des revendications précédentes, **caractérisé en ce que** l'état de déplacement rotatoire utilisé pour l'intégration numérique (16) est un angle d'orientation ($\varphi_{Pre}$) du véhicule (1), les grandeurs d'entrée ($\alpha_0$, $i_0$) de la prévision de la trajectoire définies à partir de valeurs mesurées ou estimées à l'aide de valeurs mesurées étant le taux de lacet ($\omega_0$) et l'accélération en lacet ($\overline{\omega}_0$).

6. Procédé selon l'une des revendications précédentes, **caractérisé en ce que** les constantes de temps prédéfinies ($T_{\omega.1}$, $T_{\omega.2}$, $T_{\alpha.1}$, $T_{\alpha.2}$) spécifiques au véhicule se trouvent dans un intervalle de temps de 0,3 s à 15,0 s.

7. Dispositif de prévision destiné à mettre en oeuvre un procédé de prévision de la trajectoire probable (14) d'un véhicule (1) en déplacement par intégration numérique (16) d'un modèle de véhicule dynamique avec au moins un état de déplacement rotatoire ($\varphi_{Pre}$) influencé par le mouvement de rotation du véhicule (1) et au moins un état de déplacement longitudinal ($V_{Pre}$) influencé par le mouvement longitudinal du véhicule (1), le dispositif de prévision (4) possédant une entrée de valeur mesurée (40) destinée à être raccordée à un système de détection de véhicule (3) du véhicule (1), **caractérisé en ce que** le dispositif de prévision (4) est adapté pour que des règles de fonction rapportées au temps ($\varphi_{Pre}(t)$, $V_{Pre}(t)$) sont définies pour un état de déplacement rotatoire ($\varphi_{Pre}$) prédit et/ou un état de déplacement longitudinal ($V_{Pre}$) prédit et les valeurs de l'état de déplacement ($\varphi_{Pre}$, $V_{Pre}$) respectif à des instants donnés sont prédites par intégration numérique de ces règles de fonction ($\varphi_{Pre}(t)$, $V_{Pre}(t)$), la règle de fonction rapportée au temps ($\varphi_{Pre}(t)$, $V_{Pre}(t)$) d'un état de déplacement prédit étant définie en déterminant respectivement des grandeurs d'entrée rotatoires ou longitudinales ($\omega_0$, $\overline{\omega}_0$, $\alpha_0$, $i_0$) pour respectivement au moins deux dérivées de l'état de déplacement ($\varphi_{Pre}$, $V_{Pre}$) concerné à partir de valeurs mesurées et en mettant les grandeurs d'entrée ($\omega_0$, $\overline{\omega}_0$, $\alpha_0$, $i_0$) en relation dans des modèles dynamiques linéaires d'un ordre correspondant au nombre de grandeurs d'entrée ($\omega_0$, $\overline{\omega}_0$, $\alpha_0$, $i_0$) de l'état de déplacement ($\varphi_{Pre}$, $V_{Pre}$) concerné en utilisant des constantes de temps prédéfinies ($T_{\omega.1}$, $T_{\omega.2}$, $T_{\alpha.1}$, $T_{\alpha.2}$) et en déterminant à partir du modèle linéaire une règle de fonction rapportée au temps ($\omega_{Pre}(t)$, $\alpha_{Pre}(t)$) pour les valeurs de prévision, c'est-à-dire les valeurs probables de la grandeur d'entrée respective, et en effectuant une intégration analytique de la règle de fonction ($\omega_{Pre}(t)$, $\alpha_{Pre}(t)$) pour les valeurs prévisionnelles de la grandeur d'entrée.

8. Dispositif de prévision selon la revendication 7, **caractérisé en ce que** le dispositif de prévision (4) est associé à un système d'aide à la conduite à base de caméra ou optoélectronique ou est intégré dans un tel système d'aide à la conduite.

Fig. 1

$\alpha_0$

$I_0$

$\omega_0$

$\dot{\omega}_0$

$X_{pre}(t)$

EP 3 068 671 B1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030040849 A1
- US 20100057361 A1
- US 20080071469 A1
- US 20110046843 A1